# EUROPÄISCHE PATENTSCHRIFT

(11) **EP 1 426 634 B1**
(45) Veröffentlichungstag und Bekanntmachung des Hinweises auf die Patenterteilung: **21.12.2005**
(21) Anmeldenummer: 03104537.0
(22) Anmeldetag: 04.12.2003
(51) Int. Cl.: F16B 37/04, F16B 43/00

(54) **Befestigungssystem**
Fastening system
Dispositif de fixation

(30) Priorität: 05.12.2002 DE 10256858
(43) Veröffentlichungstag der Anmeldung: 09.06.2004
(73) Patentinhaber: HILTI Aktiengesellschaft, 9494 Schaan (LI)
(72) Erfinder: Herb, Armin, 86974, Apfeldorf (DE)
(74) Vertreter: Wildi, Roland

(56) Entgegenhaltungen:
- EP-A- 0 805 297
- US-A- 2 605 871
- US-A- 5 271 586

## Beschreibung

### Technisches Gebiet

Die Erfindung betrifft ein Befestigungssystem mit einem Hintergreifteil zum Einführen in eine Montageöffnung eines Hohlkörpers, insbesondere zum Einführen in eine Montageöffnung einer C-förmigen Montageschiene, in einer ersten Stellung und zum Hintergreifen von im Hohlkörper vorgesehenen Haltevorsprüngen in einer zweiten Stellung, sowie mit zumindest einem Anschlag zur stirnaussenseitigen Beaufschlagung der, die Montageöffnung begrenzenden Ränder einer der Hohlkörperaussenseiten. Der Anschlag ist mit dem Hintergreifteil mittels eines Befestigungsmittels verbunden. Eine Einrichtung zum Induzieren einer relativen Drehbewegung ist zwischen dem Anschlag und dem Hintergreifteil um die Achse des Befestigungsmittels vorgesehen.

### Stand der Technik

Befestigungssysteme der genannten Art dienen zum Befestigen eines Gegenstandes beispielsweise auf einer, z. B. an einem Untergrund befestigten C-förmigen Montageschiene. Das Befestigungssystem wird in die Montageöffnung der Montageschiene eingeführt und um einen Winkel von beispielsweise 90° verdreht. Dadurch hintergreift das Hintergreifteil des Befestigungselements die Haltevorsprünge der Montageschiene. In dieser Vorfixierung ist es möglich das Befestigungselement in Längsrichtung der Montageschiene zur endgültigen Positionierung an der Montageschiene zu verschieben. Um eine Befestigung des Befestigungselementes an der Montageschiene zu bewirken, wird das Hintergreifteil gegenüber dem Anschlag, z. B. mittels einer Gewindestange, verspannt und damit an den Haltevorsprüngen festgeklemmt. Diese Gattung von Befestigungssystemen eignet sich zum Befestigen von länglichen Gegenständen und Leitungssträngen, wie Rohrleitungen oder dergleichen. Ein derartiges Befestigungselement ist beispielsweise aus der DE 197 36 933 A1 bekannt.

Zur Befestigung eines Leitungsstrangs an einem Hohlkörper müssen eine Vielzahl von Befestigungssystemen an dem Hohlkörper gesetzt werden. Einerseits um den Setzvorgang der einzelnen Befestigungssysteme zu beschleunigen und bei jedem Befestigungssystem die einwandfreie Ausrichtung des Hintergreifteils zu gewährleisten, wurde beispielsweise in der DE 196 17 750 C1 eine Verankerungseinheit vorgeschlagen, bei der zwischen dem Anschlag und dem, drehbar mit dem Anschlag verbundenen Hintergreifteil eine, durch Verdrehen dieser beiden Teile relativ zueinander, spannbare Rückstellfeder vorgesehen ist. Die Rückstellfeder baut beim Verdrehen eine Rückstellkraft auf. An dem Anschlag sind Drehbegrenzungsanschläge vorgesehen. Sobald sich das Hintergreifteil beim Setzvorgang der Verankerungseinheit im Innern des Hohlkörpers befindet, wird dieses durch die Rückstellkraft der Rückstellfeder zum Hintergreifen der Ränder des Hohlkörpers ausgerichtet.

Nachteilig an der bekannten Lösung ist, dass die Verankerungseinheit weiterhin nach dem Einführen in die Montageöffnung der Montageschiene um einen bestimmten Winkel verdreht werden muss, um die Haltevorsprünge optimal zu hintergreifen. Insbesondere an schlecht zugänglichen Stellen wirkt sich dieser Umstand nachteilig bei der Montage der Verankerungseinheit aus.

### Darstellung der Erfindung

Der vorliegenden Erfindung liegt die Aufgabe zugrunde, ein Befestigungssystem mit einem verdrehbaren Hintergriffteil zu schaffen, das eine Vorfixierung an einem Hohlkörper ohne eine Verdrehung um einen bestimmten Winkel des Befestigungssystems ermöglicht, wobei eine korrekte Positionierung des Hintergreifteils gegenüber den Haltevorsprüngen sichergestellt ist. Ferner soll das Befestigungssystem wirtschaftlich herstellbar sein und eine einfache Montage gewährleisten.

Die Aufgabe ist durch die Merkmale des Anspruchs 1 gelöst. Gemäss der Erfindung umfasst ein Befestigungssystem ein Hintergreifteil zum Einführen in eine Montageöffnung eines Hohlkörpers, insbesondere zum Einführen in eine Montageöffnung einer C-förmigen Montageschiene, in einer ersten Stellung und zum Hintergreifen von im Hohlkörper vorgesehenen Haltevorsprüngen in einer zweiten Stellung, sowie zumindest einem Anschlag zur stirnaussenseitigen Beaufschlagung der, die Montageöffnung begrenzenden Ränder einer der Hohlkörperaussenseiten. Der Anschlag ist mit dem Hintergreifteil mittels eines Befestigungsmittels verbunden. Eine Einrichtung zum Induzieren einer relativen Drehbewegung ist zwischen dem Anschlag und dem Hintergreifteil um die Achse des Befestigungsmittels vorgesehen. Die Einrichtung ist als Transformationseinrichtung ausgebildet zur Umsetzung einer translatorischen Bewegung des Befestigungsmittels relativ zum Anschlag in eine rotatorische Bewegung des Hintergreifteils relativ zum Anschlag.

Mittels der Transformationseinrichtung reicht beispielsweise eine Druckbewegung auf das Befestigungsmittel aus, um das, in den Hohlkörper durch die Montageöffnung eingeführte Befestigungssystem an dem Hohlkörper vor zu fixieren. Die Transformationseinrichtung bestimmt den Grad der Umsetzung der translatorischen Bewegung in eine rotatorische Bewegung, womit die Verdrehung des Hintergreifteils relativ zur Montageöffnung definiert wird. Der Anwender hat die Sicherheit, dass das Hintergreifteil korrekt zum Hintergreifen der Haltevorsprünge ausgerichtet wird. Eine Drehbetätigung beispielsweise des Anschlags oder des Befestigungsmittels durch den Anwender entfällt, weshalb das erfindungsgemässe Befestigungssystem auch in schwer zugänglichen Montageorten einsetzbar ist. Das vorfixierte Befestigungssystem wird anschliessend mittels des Befestigungsmittels verspannt und lösbar an dem Hohlkörper befestigt. Wird das erfindungsgemässe Befestigungssystem in einer, als Langloch ausgebildeten Montageöffnung oder einer Montageöffnung einer C-förmigen Montageschiene angeordnet, kann das Befestigungssystem nach der Vorfixierung durch erneuten Druck auf das Befestigungsmittel aus der Vorfixierung gelöst und entlang der Längsachse des Hohlkörpers verschoben sowie in der gewünschten Position mit dem Hohlkörper mittels dem Befestigungsmittel verspannt werden.

Vorzugsweise umfasst die Transformationseinrichtung ein Ringelement, wobei das Ringelement drehfest mit dem Anschlag verbunden ist. Das Ringelement umfasst zumindest ein, federelastisch beaufschlagtes Stellglied, wobei das federelastisch beaufschlagte Stellglied im Wesentlichen in Drehrichtung des Befestigungsmittels schwenkbar, und in radialer Richtung zur Längsachse des Befestigungsmittels im Wesentlichen bewegungsstarr gehalten ist. Das federelastisch beaufschlagte Stellglied weist an dessen freien Ende ein Rastmittel auf, wie z. B. ein Rastelement, wobei das Rastelement in Gegenrastmittel, wie z. B. ein Gegenrastelement, am Befestigungsmittel in Eingriff bringbar ist. Durch die vorgegebene Schwenkrichtung und die Verhinderung eines Ausschwenkens in radialer Richtung des zumindest einen Stellglieds wird das Befestigungsmittel bei dessen translatorischen Betätigung in die gewünschte Drehrichtung verdreht. Das reibschlüssig oder kraftschlüssig mit dem Befestigungsmittel verbundene Hintergreifteil dreht sich bei der umgesetzten Drehbewegung des Befestigungsmittels mit diesem mit. Das an dem zumindest einen Stellglied vorgesehene Rastelement verbleibt in dem Gegenrastmittel an dem Befestigungsmittel während der translatorischen Bewegung des Befestigungsmittels und setzt diese in eine rotatorische Bewegung um.

Ein federelastisch beaufschlagtes Stellglied ist beispielsweise ein Materialstück, das eine federnde Wirkung aufweist. Das Rastelement ist beispielsweise eine Führungsspitze, die in als Gegenrastelement ausgebildete Vertiefungen und/oder Ausnehmungen eingreift. Das Rastelement kann an dem Stellglied ausgeformt oder als separates Teil, beispielsweise mit anderen, als das Stellglied aufweisende Materialeigenschaften ausgestattet, an dem Stellglied angeordnet sein. Des Weiteren können druckbeaufschlagte Zylinder verwendet werden, wie beispielsweise eine federbeaufschlagte, pneumatische oder hydraulische zylinderähnliche Konstruktionen.

Die Grösse der Verdrehung des Befestigungsmittels relativ zur Ausgangsstellung des Befestigungssystem, beziehungsweise des Hintergreifteils, ist im Wesentlichen von der Neigung des Stellglieds im unbetätigten Zustand und dessen Erstreckung in Umfangsrichtung der Drehbewegung abhängig. Das Stellglied wird vorzugsweise derart ausgebildet, dass vor dem Erreichen der Begrenzung der Bewegung des Befestigungsmittels in dessen Längsrichtung z. B. an der Oberseite des Anschlags, das Hintergreifteil bereits zum Hintergreifen der im Hohlkörper vorgesehenen Haltevorsprünge ausgerichtet ist. Wird das Befestigungselement entlastet, hebt sich dieses, infolge der von dem federelastisch beaufschlagten Stellgliedes aufgebauten Federkraft, gegenüber dem Anschlag an, wobei das Hintergreifteil mit den im Hohlkörper vorgesehenen Haltevorsprüngen in Eingriff kommt und das Befestigungssystem an dem Hohlkörper vorfixiert ist. Bei einem erneuten Druck auf das Befestigungsmittel wird die Vorfixierung des Befestigungssystems gelöst und das Befestigungssystem lässt sich in Längsrichtung der Montageschiene entlang der Montageöffnung verschieben.

In einer erfindungsgemässen Variante ist das Ringelement drehfest mit dem Befestigungsmittel verbunden. Das Ringelement umfasst zumindest ein, federelastisch beaufschlagtes Stellglied, wobei das federelastisch beaufschlagte Stellglied im Wesentlichen in Drehrichtung des Befestigungsmittels schwenkbar und in radialer Richtung zur Längsachse des Befestigungsmittels im Wesentlichen bewegungsstarr gehalten ist. Das federelastisch beaufschlagte Stellglied weist an dessen freien Ende ein Rastmittel auf, wobei das Rastmittel in Gegenrastmittel am Anschlag in Eingriff bringbar ist. Die Funktionsweise dieser erfindungsgemässen Variante der Transformationseinrichtung ist mit der zuvor beschriebenen Transformationseinrichtung im Wesentlichen identisch.

Bevorzugt weist die Transformationseinrichtung eine Selbsthemmung zum Blockieren einer rotatorischen Gegenbewegung des Befestigungsmittels auf, wobei die Selbsthemmung optional zumindest ein zweites, diametral dem ersten Stellglied gegenüberliegendes federelastisch beaufschlagtes Stellglied aufweist. Das in die Gegenrastmittel verrastete Rastelement verhindert, dass sich das Befestigungsmittel entgegen der gewünschten Drehrichtung drehen kann, wenn beispielsweise der Druck auf das Befestigungsmittel nach der Induzierung der Drehbewegung gelöst wird. Das Befestigungsmittel kann sich zwar über den Anschlag heben, aber eine unerwünschte Drehung des Befestigungsmittels ist verhindert. Dazu kann beispielsweise das Gelenk an der Befestigung des Stellglieds derart ausgebildet werden, dass es nur eine Schwenkbewegung in die gewünschte Drehrichtung erlaubt, beziehungsweise die Schwenkbewegung bei der Entlastung des Schwenkglieds weiterführt und jegliche Gegenbewegung blockiert.

Wird als erstes Stellglied eine zylinderähnliche Konstruktion angeordnet, kann diese derart ausgebildet werden, dass eine Drehung entgegen der vorgegebenen Drehbewegung des Befestigungsmittels verhindert ist. Ebenso verhält es sich bei einem federelastisch beaufschlagten Stellglied, bei dem infolge der Gelenkausbildung im Bereich der Befestigung des Stellglieds am Ringelement eine Bewegung des Befestigungsmittels entgegen der vorgegebenen Drehrichtung verhindert ist. Bei diesen Ausführungen ist gegebenenfalls die Selbsthemmung der Transformationseinrichtung bereits mittels nur eines Stellgliedes gegeben.

Die Selbsthemmung der Transformationseinrichtung kann ebenfalls durch die Anordnung von mehr als zwei Stellgliedern erreicht werden. Bevorzugt sind an dem Ringelement eine gerade Anzahl von federelastisch beaufschlagten Stellgliedern, jeweils paarweise und diametral gegenüberliegend zueinander vorgesehen. Dabei weist vorzugsweise die ungerade Zahl der Stellglieder ein Rastelement in Form einer Spitze oder Nase auf und die gerade Zahl der Stellglieder ist mit einem hakenähnlichen Rastelement versehen. Mittels der beispielsweise als Widerhaken ausgebildeten Rastelemente der geraden Zahl der Stellglieder wird eine Bewegung des Befestigungsmittels entgegen der vorgegebenen Drehbewegung des Befestigungsmittels verhindert.

Vorteilhafterweise ist das zumindest eine Stellglied gebogen oder wendelförmig und radial nach innen relativ zur Längsachse des Befestigungsmittels ausgerichtet. Mit dieser Ausgestaltung der Stellglieder wird ein unerwünschtes Ausscheren, beziehungsweise ein unerwünschtes, in radialer Richtung erfolgendes Herausgleiten der Stellglieder bei der Betätigung und Bewegung des Befestigungsmittels weitgehend verhindert.

Vorzugsweise ist an dem Befestigungsmittel als Betätigungsmittel ein Drehmomentübertragungsmittel vorgesehen. Optional umfasst das Befestigungsmittel eine Schraube. Das Drehmomentübertragungsmittel weist beispielsweise eine äussere Ausgestaltung analog einer Sechskantmutter auf, die mit einem handelsüblichen Schlüssel betätigbar ist.

Bevorzugt ist die Transformationseinrichtung aus Blech in einem Stanz-/Biegeverfahren gefertigt. Ein weiterer möglicher Werkstoff zur Herstellung der Transformationseinrichtung stellt ein, den Anforderungen entsprechender Kunststoff dar. Des Weiteren können, zur Fertigung der Transformationseinrichtung oder Teile dieser, unterschiedliche Werkstoffe in Kombination miteinander verwendet werden. Bei einer solchen Ausführungsform lassen sich die verschiedenen Materialeigenschaften der unterschiedlichen Werkstoffe für eine Transformationseinrichtung beispielsweise hinsichtlich der Produktionskosten, den technischen Anforderungen oder dergleichen optimieren.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand zweier Ausführungsbeispiele näher erläutert. Es zeigen:
- Fig. 1a-d: Jeweils einen Schnitt eines ersten Ausführungsbeispiels des erfindungsgemässen Befestigungssystems in vier verschiedenen Positionen des Setzvorgangs;
- Fig. 2a-d: jeweils eine Aufsicht auf die Stellung des Hintergreifteils bezogen auf die Fig. 1a bis Fig. 1d;
- Fig. 3: eine Draufsicht auf ein Ringelement eines zweiten erfindungsgemässen Befestigungssystems;
- Fig. 4a: einen Schnitt entlang der Linie IVa-IVa in der Fig. 3; und
- Fig. 4b: einen Schnitt entlang der Linie IVb-IVb in der Fig. 3.

Grundsätzlich sind in den Figuren gleiche Teile mit den gleichen Bezugszeichen versehen.

### Wege zur Ausführung der Erfindung

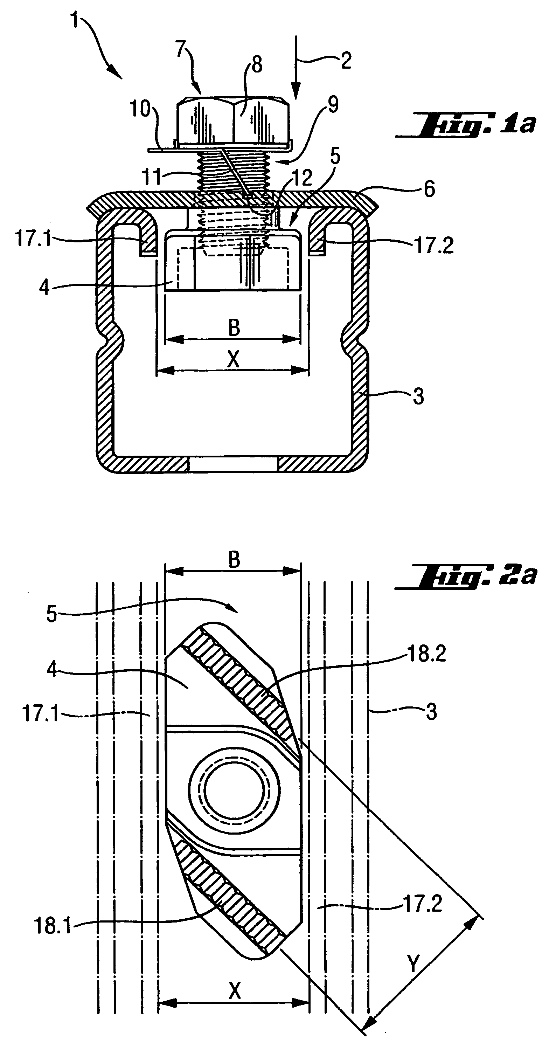

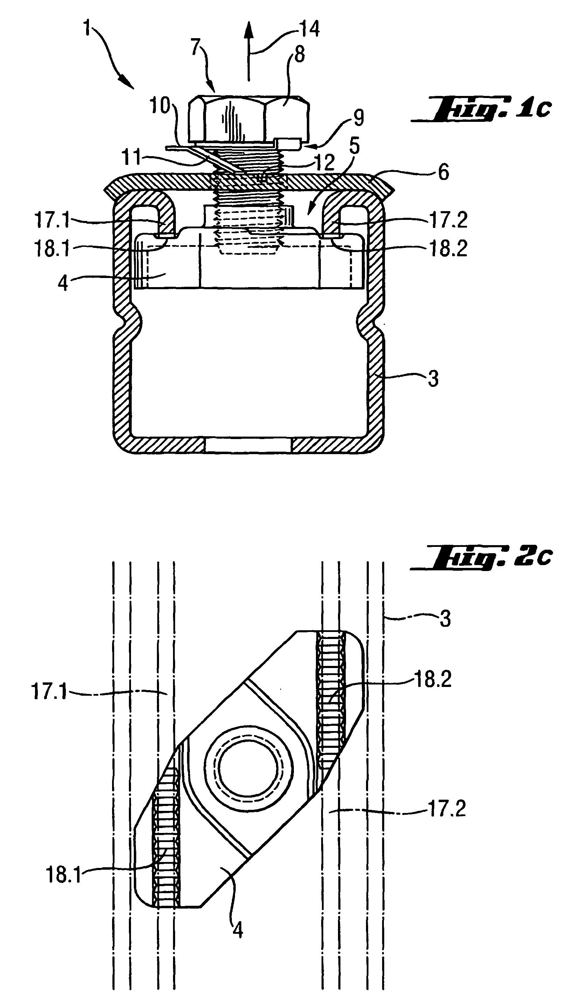

Die Fig. 1a bis Fig. 1d zeigen jeweils einen Schnitt eines ersten Ausführungsbeispiels des erfindungsgemässen Befestigungssystems in vier verschiedenen Positionen des Setzvorgangs des Befestigungssystems. Die Fig. 2a bis Fig. 2d zeigen jeweils eine Aufsicht auf die Stellung des Hintergreifteils relativ zur Montageschiene bezogen auf die, in Fig. 1a bis Fig. 1d dargestellten Positionen des Befestigungssystems.

In Fig. 1a ist das Befestigungssystem 1 beim Einführen in Richtung des Pfeils 2 in die Montageschiene 3 dargestellt. Das Hintergreifteil 4 wird dabei in die Montageöffnung 5 der Montageschiene 3 eingesetzt. Das Hintergreifteil 4 weist zum Einführen in die Montageöffnung 5 eine Breite B auf, die weniger als der Abstand X der in der Montageschiene 3 vorgesehenen Haltevorsprünge 17.1 und 17.2 zueinander beträgt. Der Abstand Y der Hintergreifbereiche 18.1 und 18.2 (siehe Fig. 2a) des Hintergreifteils 4 zueinander beträgt mehr als der Abstand X der Haltevorsprünge 17.1 und 17.2 zueinander, um ein Hintergreifen des Hintergreifteils 4 von den Haltevorsprüngen 17.1 und 17.2 zu ermöglichen.

Mittels dem Anschlag 6 wird die Montageschiene 3 stirnaussenseitig beaufschlagt. Das Befestigungssystem 1 umfasst weiter eine, als Befestigungsmittel ausgebildete Schraube 7, die mit dem Hintergreifteil 4 kraftschlüssig verbunden ist. Die Schraube 7 ist im Anschlag 6 drehbewegungsfrei geführt. Zwischen einem, an der Schraube 7 als Drehmomentübertragungsmittel ausgebildeten Schraubenkopf 8 und dem Anschlag 6 ist die Transformationseinrichtung 9 vorgesehen, die das, an dem Schraubenkopf 8 drehfest verbundene Ringelement 10 und das federelastisch beaufschlagte Stellglied 11 umfasst. Das Stellglied 11 greift in die, an dem Anschlag 6 vorgesehene und als Gegenrastmittel ausgebildete Vertiefung 12 ein. Wie den nachfolgenden Ausführungen zu entnehmen ist, sind vorzugsweise mehrere Vertiefungen analog der Vertiefung 12 an der Oberseite des Anschlags 6 vorgesehen, so dass das Stellglied 11 in diese einrasten und sich an diesen abstützen kann. Das Befestigungssystem 1 befindet sich in dieser Stellung in der sogenannten Transport-, beziehungsweise Einführstellung.

In Fig. 2a ist das Hintergreifteil 4 in der entsprechend der Fig. 1a beschriebenen Stellung in Bezug auf die Montageschiene 3 dargestellt. Für ein besseres Verständnis der Zeichnung ist in der Fig. 2a, wie auch in den Fig. 2b bis Fig. 2d die Montageschiene 3 strichpunktiert dargestellt.

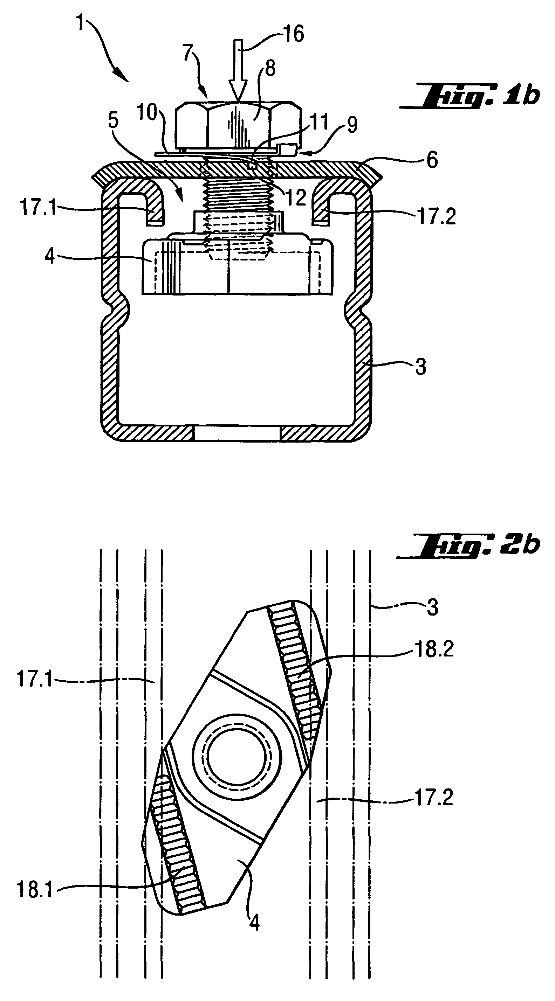

Durch Druck auf die Schraube 7 in Richtung des Pfeils 16 wird das Hintergreifteil 4 in die Montageschiene 3 abgesenkt und abgedreht, was in der Fig. 1b dargestellt ist. Dabei wird der Abstand zwischen dem Schraubenkopf 8 und dem Anschlag 6 reduziert. Der Weg, den die Schraube 7 dabei zurücklegt, reicht aus, dass das Hintergreifteil 4 in Setzrichtung des Befestigungselements 1 unter die, in der Montageschiene 3 vorgesehenen Haltevorsprünge 17.1 und 17.2 gedreht wird. Bei der Betätigung der Schraube 7 in Richtung des Pfeils 16 wird die Transformationseinrichtung 9 zusammengedrückt. Da sich das Stellglied 11 in der Vertiefung 12 abstützt, wird die Schraube 7 in die vorgesehene Drehrichtung, bei diesem Ausführungsbeispiel im Uhrzeigersinn, beziehungsweise nach rechts, gedreht. Infolge der kraftschlüssigen Verbindung zwischen der Schraube 7 und dem Hintergreifteil 4 wird dieses bei diesem Setzvorgang mitgedreht. Solange ein Abdrehen des Hintergreifteils 4 durch die Haltevorsprünge 17.1 und 17.2 verhindert ist, rastet das Stellglied 11 infolge der drehfesten Verbindung zwischen dem Ringelement 10 und dem Schraubenkopf 8 entlang der Oberseite des Anschlags 6 von der Vertiefung 12 zu der nächsten, beziehungsweise einer der nachfolgenden Vertiefungen. In Fig. 2a ist das teilweise abgedrehte Hintergreifteil in Bezug auf die Haltevorsprünge 17.1 und 17.2 der Montageschiene 3 dargestellt.

Sobald der Schraubenkopf 8 der Schraube 7 an dem Anschlag 6 ansteht, ist durch den vorbestimmten Weg der Transformationseinrichtung 9 das Hintergreifteil 4 zum Hintergreifen der Haltevorsprünge 17.1 und 17.2 ausgerichtet, wie dies in der Fig. 1c dargestellt ist. Durch Wegnahme des Drucks und infolge der federelastischen Beaufschlagung des Stellglieds 11 wird die Schraube 7 relativ zum Anschlag 6 in Pfeilrichtung 14 angehoben, bis die Hintergreifbereiche18.1 und 18.2 des Hintergreifteils 4 mit den Haltevorsprüngen 17.1 und 17.2 der Montageschiene 3 in Eingriff stehen. Das Befestigungssystem 1 ist nun an der Montageschiene 3 vorfixiert und befindet sich in der sogenannten Sicherungsstellung.

In Fig. 2c ist das zum Hintergreifen der Haltevorsprünge 17.1 und 17.2 ausgerichtete Hintergreifteil 4 in der Draufsicht gezeigt. An den Hintergreifbereichen 18.1 und 18.2 des Hintergreifteils 4 ist jeweils eine Rändelung zur Verbesserung des Eingriffs mit den Haltevorsprüngen 17.1 und 17.2 vorgesehen. Die freien Ränder der Haltevorsprünge 17.1 und 17.2 weisen bevorzugt ebenfalls eine Rändelung auf, die mit der Rändelung an den Hintergreifbereichen 18.1 und 18.2 des Hintergreifteils 4 zusammenwirken kann.

Mittels erneuten Drucks auf die Schraube 7 wird die Vorfixierung zwischen dem Hintergreifteil 4 und der Montageschiene 3 gelöst und das Befestigungssystem 1 kann entlang der Montageöffnung 5 der Montageschiene 3 in deren Längsachse verschoben werden. Nach Erreichen der gewünschten Position des Befestigungssystems 1 an der Montageschiene 3 hintergreift das Hintergreifteil 4 erneut die Haltevorsprünge 17.1 und 17.2 der Montageschiene 3. Die Schraube 7 wird, z. B. in Dreh-Pfeilrichtung 19 (siehe Fig. 1d), verspannt, wobei das Hintergreifteil 4 an den Haltevorsprüngen 17.1 und 17.2 fixiert wird. Wie in der Fig. 2d gezeigt ist, verbleibt das Hintergreifteil 4 während dem Positionierungsvorgang des Befestigungssystems 1 und dem anschliessenden Verspannen der Schraube 7 in der Position zum Hintergreifen der Haltevorsprünge 17.1 und 17.2, da die Transformationseinrichtung 9 eine unerwünschte Drehung des Hintergreifteils 4 relativ zur Montageschiene 3 verhindert.

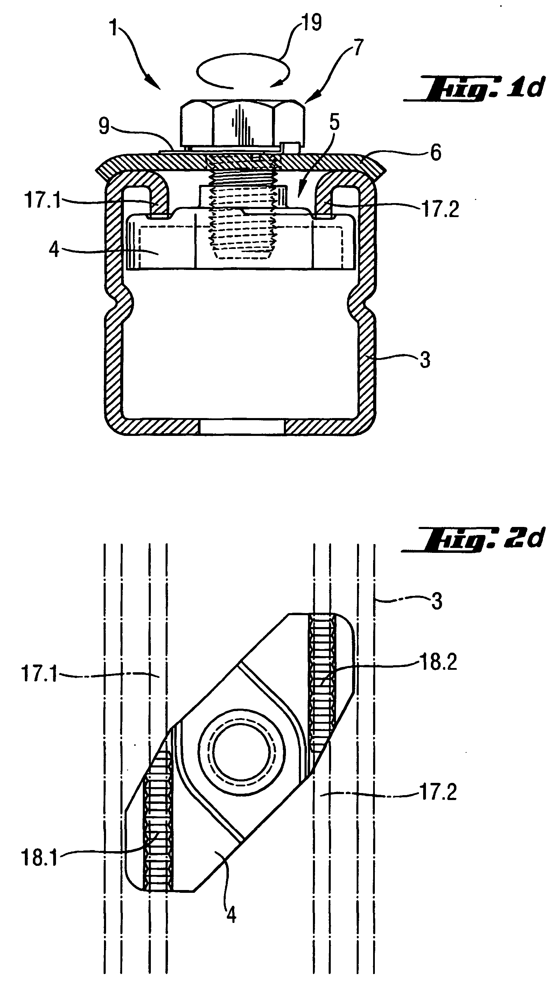

In Fig. 3 ist eine Draufsicht auf ein Ringelement eines zweiten erfindungsgemässen Befestigungssystems gezeigt. Die Transformationseinrichtung 31 umfasst ein Ringelement 34, das im Wesentlichen eine Ausgestaltung analog einer Unterlagsscheibe für eine Schraube aufweist und aus Blech oder einem Kunststoff gefertigt ist. An dem Ringelement 31 sind zwei, federelastisch beaufschlagte Stellglieder 32 und 33 ausgebildet.

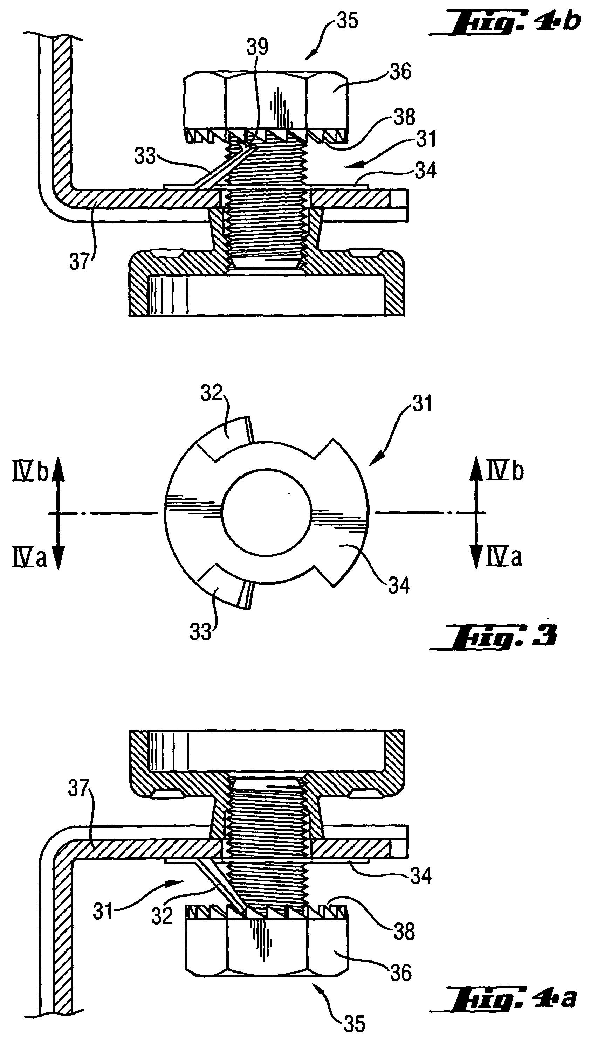

Fig. 4a zeigt einen Schnitt entlang der Linie IVa-IVa in der Fig. 3 und Fig. 4b zeigt einen Schnitt entlang der Linie IVb-IVb in der Fig. 3. Die Transformationseinrichtung 31 ist zwischen einem, als Drehübertragungsmittel ausgebildeten Schraubenkopf 36 einer, als Befestigungsmittel ausgebildeten Schraube 35 und dem Anschlag 37 angeordnet, wobei das Ringelement 34 drehfest an dem Anschlag 37 z. B. angeklebt ist. An dem Schraubenkopf 36 in Richtung des Anschlags 37 sind eine Vielzahl von, als Gegenrastmittel ausgebildeten Vertiefungen 38 ausgebildet, in denen das Stellglied 32 sowie das Stellglied 33 eingreifen können. Wie in Fig. 4b dargestellt ist, ist das Stellglied 33 an dessen freiem Ende mit einem, als Rastmittel ausgebildeten Widerhaken 39 versehen. Die Transformationseinrichtung 31 weist somit eine Selbsthemmung auf, die eine rotatorische Gegenbewegung der Schraube 35 während dem Setzvorgang des entsprechenden Befestigungssystems verhindert.

Zusammenfassend ist festzustellen, dass mit dem erfindungsgemässen Befestigungssystem eine Vorfixierung an einem Hohlkörper ermöglicht ist, ohne dass der Anwender das Befestigungssystem oder Teile davon selbst um einen bestimmten Winkel verdrehen muss. Eine Bewegung auf das Befestigungsmittel relativ zum Anschlag reicht aus, um eine korrekte Positionierung des Hintergreifteils gegenüber den Haltevorsprüngen sicherzustellen. Dabei ist das Befestigungssystem wirtschaftlich herstellbar.

## Patentansprüche

1. Befestigungssystem mit einem Hintergreifteil (4) zum Einführen in eine Montageöffnung eines Hohlkörpers, insbesondere zum Einführen in eine Montageöffnung (5) einer C-förmigen Montageschiene (3), in einer ersten Stellung und zum Hintergreifen von im Hohlkörper vorgesehenen Haltevorsprüngen (17.1, 17.2) in einer zweiten Stellung, sowie mit zumindest einem Anschlag (6; 37) zur stirnaussenseitigen Beaufschlagung der, die Montageöffnung (5) begrenzenden Ränder einer der Hohlkörperaussenseiten, wobei der Anschlag (6; 37) mit dem Hintergreifteil (4) mittels eines Befestigungsmittels verbunden ist, und wobei eine Einrichtung zum Induzieren einer relativen Drehbewegung zwischen dem Anschlag (6; 37) und dem Hintergreifteil (4) um die Achse des Befestigungsmittels (7; 35) vorgesehen ist, **dadurch gekennzeichnet, dass** die Einrichtung als Transformationseinrichtung (9; 31) ausgebildet ist zur Umsetzung einer translatorischen Bewegung des Befestigungsmittels relativ zum Anschlag (6; 37) in eine rotatorische Bewegung des Hintergreifteils (4) relativ zum Anschlag (6; 37).

2. Befestigungssystem nach Anspruch 1, **dadurch gekennzeichnet, dass** die Transformationseinrichtung (31) ein Ringelement (34) umfasst, wobei das Ringelement (34) drehfest mit dem Anschlag (37) verbunden ist, und dass das Ringelement (34) zumindest ein, federelastisch beaufschlagtes Stellglied (32, 33) umfasst, wobei das federelastisch beaufschlagte Stellglied (32, 33) in Drehrichtung des Befestigungsmittels schwenkbar und in radialer Richtung zur Längsachse des Befestigungsmittels im Wesentlichen bewegungsstarr gehalten ist, und dass das federelastisch beaufschlagte Stellglied (32, 33) an seinem freien Ende ein Rastmittel aufweist, wobei das Rastmittel in Gegenrastmittel am Befestigungsmittel in Eingriff bringbar ist.

3. Befestigungssystem nach Anspruch 1, **dadurch gekennzeichnet, dass** die Transformationseinrichtung (9) ein Ringelement (10) umfasst, wobei das Ringelement (10) drehfest mit dem Befestigungsmittel verbunden ist, und dass das Ringelement (10) zumindest ein, federelastisch beaufschlagtes Stellglied (11) umfasst, wobei das federelastisch beaufschlagte Stellglied (11) in Drehrichtung des Befestigungsmittels schwenkbar und in radialer Richtung zur Längsachse des Befestigungsmittels im Wesentlichen bewegungsstarr gehalten ist, und dass das federelastisch beaufschlagte Stellglied (11) an seinem freien Ende ein Rastmittel aufweist, wobei das Rastmittel in Gegenrastmittel am Anschlag (6) in Eingriff bringbar ist.

4. Befestigungssystem nach einem der Ansprüche 1 bis 3, **dadurch gekennzeichnet, dass** die Transformationseinrichtung (9; 31) eine Selbsthemmung zum Blockieren einer rotatorischen Gegenbewegung des Befestigungsmittels aufweist, wobei die Selbsthemmung optional zumindest ein zweites, diametral dem ersten Stellglied (32) gegenüberliegendes federelastisch beaufschlagtes Stellglied (33) aufweist.

5. Befestigungssystem nach einem der Ansprüche 2 bis 4, **dadurch gekennzeichnet, dass** das zumindest eine Stellglied (11; 32, 33) wendelförmig und radial nach innen relativ zur Längsachse des Befestigungsmittels ausgerichtet ist.

6. Befestigungssystem nach einem der Ansprüche 1 bis 5, **dadurch gekennzeichnet, dass** an dem Befestigungsmittel als Betätigungsmittel ein Drehmomentübertragungsmittel vorgesehen ist, und dass optional das Befestigungsmittel eine Schraube umfasst.

7. Befestigungssystem nach einem der Ansprüche 1 bis 6, **dadurch gekennzeichnet, dass** die Transformationseinrichtung (9; 31) aus Blech in einem Stanz-/Biegeverfahren gefertigt ist.

## Claims

1. A fastening system having an engaging member (4) for insertion into an opening provided in a hollow body for fixing purposes, in particular for insertion into such an opening (5) provided in a C-shaped fitting rail (3) in a first position, and for engaging behind retaining lugs (17.1, 17.2) provided in the hollow body in a second position, as well as having at least one stop (6; 37) for bearing upon the front and outer sides of the edges delimiting the opening (5) in one of the outer sides of the hollow body, the stop (6; 37) being attached to the engaging member (4) by fastening means, and means being provided for inducing a relative rotation between the stop (6; 37) and the engaging member (4) about the axis of the fastening means (7; 35), **characterized in that** said means for inducing the relative rotation take the form of a transformation device (9; 31) for converting a translational movement of the fastening means relative to the stop (6; 37) into a rotational movement of the engaging member (4) relative to the stop (6; 37).

2. A fastening system according to Claim 1, **characterized in that** the transformation device (31) comprises an annular element (34), the annular element (34) being attached to the stop (37) in such a way as to be non-rotatable, and **in that** the annular element (34) includes at least one elastically loaded adjusting member (32, 33), said elastically loaded adjusting member (32, 33) being pivotable in direction of rotation of the fastening means and being held so as to be substantially rigid against movement in radial direction relative to the longitudinal axis of the fastening means, and **in that** the elastically loaded adjusting member (32, 33) has snap-in means at its free end, the snap-in means being capable of engaging in corresponding snap-in means on the fastening means.

3. A fastening system according to Claim 1, **characterized in that** the transformation device (9) comprises an annular element (10), the annular element (10) being non-rotatably attached to the fastening means, and **in that** the annular element (10) has at least one elastically loaded adjusting member (11), said elastically loaded adjusting member (11) being pivotable in direction of rotation of the fastening means and being held so as to be substantially rigid against movement in radial direction relative to the longitudinal axis of the fastening means, and **in that** the elastically loaded adjusting member (11) has snap-in means at its free end, said snap-in means being capable of engaging in corresponding snap-in means on the stop (6).

4. A fastening system according to one of Claims 1 to 3, **characterized in that** the transformation device (9; 31) includes self-locking means for blocking a rotational counter-movement of the fastening means, the self-locking means optionally having at least a second elastically loaded adjusting member (33) located diametrically opposite the first adjusting member (32).

5. A fastening system according to one of Claims 2 to 4, **characterized in that** the at least one adjusting member (11; 32, 33) takes the form of a spiral and is oriented radially inwards relative to the longitudinal axis of the fastening means.

6. A fastening system according to one of Claims 1 to 5, **characterized in that** provided on the fastening means as operating means are torque-transmitting means, and **in that** the fastening means optionally comprise a screw.

7. A fastening system according to one of Claims 1 to 6, **characterized in that** the transformation device (9; 31) is made from sheet metal in a stamping/bending process.

## Revendications

1. Système de fixation comprenant une pièce de retenue arrière (4) destinée à être introduite dans une ouverture de montage d'un corps creux, en particulier à être introduite dans une ouverture de montage (5) d'un rail de montage en forme de C (3), dans une première position et à s'engager derrière des saillies de retenue (17.1, 17.2) prévues dans le corps creux dans une seconde position, et comprenant au moins une butée (6 ; 37) pour solliciter le côté frontal extérieur des bords d'un des côtés extérieurs du corps creux qui délimitent l'ouverture de montage (5), la butée (6 ; 37) étant reliée à la pièce de retenue arrière (4) à l'aide d'un moyen de fixation, et un dispositif étant prévu pour induire un mouvement de rotation relatif entre la butée (6 ; 37) et la pièce de retenue arrière (4) autour de l'axe du moyen de fixation (7 ; 35), **caractérisé en ce que** le dispositif est conformé en dispositif de transformation (9 ; 31) pour convertir un mouvement de translation du moyen de fixation par rapport à la butée (6 ; 37) en un mouvement de rotation de la pièce de retenue arrière (4) par rapport à la butée (6 ; 37).

2. Système de fixation selon la revendication 1, **caractérisé en ce que** le dispositif de transformation (31) comprend un élément annulaire (34), l'élément annulaire (34) étant lié en rotation à la butée (37), et **en ce que** l'élément annulaire (34) comprend au moins un l'organe de positionnement sollicité élastiquement (32, 33), l'organe de positionnement sollicité élastiquement (32, 33) pouvant pivoter dans la direction de rotation du moyen de fixation et étant maintenu de manière sensiblement rigide dans la direction radiale à l'axe longitudinal du moyen de fixation, et **en ce que** l'organe de positionnement sollicité élastiquement (32, 33) comporte, à son extrémité libre, un moyen d'encliquetage, le moyen d'encliquetage pouvant être amené en prise avec un moyen d'encliquetage antagoniste disposé sur le moyen de fixation.

3. Système de fixation selon la revendication 1, **caractérisé en ce que** le dispositif de transformation (9) comprend un élément annulaire (10), l'élément annulaire (10) étant lié en rotation au moyen de fixation, et **en ce que** l'élément annulaire (10) comprend au moins un organe de positionnement sollicité élastiquement (11), l'organe de positionnement sollicité élastiquement (11) pouvant pivoter dans la direction de rotation du moyen de fixation et étant maintenu de manière sensiblement rigide dans la direction radiale à l'axe longitudinal du moyen de fixation, et **en ce que** l'organe de positionnement sollicité élastiquement (11) comporte, à son extrémité libre, un moyen d'encliquetage, le moyen d'encliquetage pouvant être amené en prise avec un moyen d'encliquetage antagoniste disposé sur la butée (6).

4. Système de fixation selon une des revendications 1 à 3, **caractérisé en ce que** le dispositif de transformation (9 ; 31) comporte un moyen de blocage automatique pour empêcher un déplacement rotatif du moyen de fixation en sens inverse, le moyen de blocage automatique comportant optionnellement un second organe de positionnement sollicité élastiquement (33) diamétralement opposé au premier organe de positionnement (32).

5. Système de fixation selon une des revendications 2 à 4, **caractérisé en ce que** l'organe de positionnement (11 ; 32, 33), au nombre d'au moins un, est orienté de manière hélicoïdale et radiale vers l'intérieur par rapport à l'axe longitudinal du moyen de fixation.

6. Système de fixation selon une des revendications 1 à 5, **caractérisé en ce qu'**un moyen de transmission de couple est prévu à titre de moyen d'actionnement sur le moyen de fixation, et **en ce que** le moyen de fixation comporte optionnellement une vis.

7. Système de fixation selon une des revendications 1 à 6, **caractérisé en ce que** le dispositif de transformation (9 ; 31) est réalisé en tôle par un procédé de découpage-pliage.
